# EUROPEAN PATENT APPLICATION

(11) **EP 2 395 717 A1**
(43) Date of publication of application: **14.12.2011**
(21) Application number: 11004653.9
(22) Date of filing: 08.06.2011
(51) Int. Cl.: H04L 12/58

(54) **Method for forwarding multimedia messages in a public land mobile network, the handling of a short message, core network for forwarding multimedia messages in a public land mobile network, and unit providing a multimedia message forwarding function in a core network**

(30) Priority: 14.06.2010 EP 10006123; 14.06.2010 US 354595
(71) Applicant: T-Mobile International Austria GmbH, 1030 Wien (AT)
(72) Inventor: Schandl, Daniel, 3441 Judenau (AT); Fuchshuber, David, 1230 Wien (AT); Prikowitsch, Florian, 2304 Orth an der Donau (AT)
(74) Representative: Schwöbel, Thilo K.

(57) **Abstract**

The invention relates to a method and a Core Network for forwarding a multimedia message in a public land mobile network (PLMN), the public land mobile network (PLMN) comprising a Core Network having a unit providing an multimedia message forwarding function for forwarding multimedia messages, the method comprising the steps of:
- in a forwarding information database storing a multimedia message forwarding information being related to the forwarding to a second International Mobile Subscriber Identity (IMSI) of multimedia messages that are directed to a first International Mobile Subscriber Identity (IMSI),
- the public land mobile network (PLMN) receiving a request for the delivery of a mobile terminated multimedia message to the first International Mobile Subscriber Identity (IMSI),
- the multimedia message forwarding function determining the multimedia message forwarding information, and
- the multimedia message forwarding function providing for the forwarding of the multimedia message to the second International Mobile Subscriber Identity (IMSI).

## Description

The present invention relates a method for forwarding multimedia messages in a public land mobile network. Furthermore, the present invention relates to a Core Network for forwarding multimedia messages in a public land mobile network, and to a Unit providing a multimedia message forwarding function in a Core Network.

Call forwarding for voice calls is a standard functionality of Global System of Mobile Communication (GSM) and Universal Mobile Telecommunication System (UMTS) radio access networks. However, the forwarding of multimedia messages has hitherto not been possible in practice.

A forwarding functionality with respect to short messages is disclosed in international patent application publication WO 2008/006462 A1. However, this solution does not provide for a solution for forwarding multimedia messages.

### SUMMARY

An object of the present invention is to provide a method for forwarding multimedia messages in a public land mobile network. A further object of the present invention is to provide a Core Network for forwarding multimedia messages in a public land mobile network, a unit providing a multimedia message forwarding function in a Core Network, a program comprising a computer readable program code for controlling a unit providing a multimedia message forwarding function, and a computer program product comprising a computer-readable storage medium having computer-readable program instructions embodied in the medium for executing the inventive method. One object of the present invention is to be able to easily and efficiently (especially cost efficiently) implement a forwarding functionality of multimedia messages in an existing public land mobile network (PLMN) or radio access network that previously did not have such an additional functionality.

The object of the present invention is achieved by a method for forwarding multimedia messages in a public land mobile network (PLMN), the public land mobile network (PLMN) comprising a Core Network having a unit providing an multimedia message forwarding function for forwarding multimedia messages, the method comprising the steps of:
- in a forwarding information database storing a multimedia message forwarding information being related to the forwarding to a second International Mobile Subscriber Identity (IMSI) of multimedia messages that are directed to a first International Mobile Subscriber Identity (IMSI),
- the public land mobile network (PLMN) receiving a request for the delivery of a mobile terminated multimedia message to the first International Mobile Subscriber Identity (IMSI),
- the multimedia message forwarding function determining the multimedia message forwarding information, and
- the multimedia message forwarding function providing for the forwarding of the multimedia message to the second International Mobile Subscriber Identity (IMSI).

According to the present invention, it is thereby advantageously possible that a complete reutilisation of existing interfaces of all network elements can be realized that are involved in the handling of mobile terminated multimedia messages. Especially, this is true for the interfaces of the Multimedia Messaging Service Center (MMSC) and/or of the interfaces of the Wireless Application Part Gateway (WAP GW), but also the interfaces of the Short Message Service Center (SMSC), the Mobile Switching Center (MSC) and the Home Location Register (HLR) of the public land mobile network (PLMN) can be reused. It is advantageous according to the present invention that no modification of any existing network element is necessary due to the enhanced functionality because all the functionalites of the multimedia message service for a User Equipment connected to the public land mobile network (PLMN) resides within the unit providing the multimedia message forwarding function. Moreover, such an implementation provides a comparably high degree of flexibility, ease of implementation of the new functionality, and ease of administration of this additional functionality. It is advantageous according to the present invention that the inventive functionality can be implemented in different types of public land mobile networks (PLMN) such as GERAN (GSM Edge Radio Access Network) networks or UTRAN (UMTS Terrestrial Radio Access Network) networks.

Very preferably, the unit providing the multimedia message forwarding function comprises three different functional blocks, namely an interaction functional block, a translation functional block and a charging functional block. Thereby, it is possible to keep the interactions comparably simple.

According to the present invention, it is furthermore preferred that the multimedia message forwarding information is provided such that the forwarding to the second International Mobile Subscriber Identity (IMSI) of the multimedia message directed to the first International Mobile Subscriber Identity (IMSI) depends on at least one parameter out of the time of reception of the multimedia message, the state of activation of the subscriber related to the first International Mobile Subscriber Identity (IMSI), and the state of activation of the subscriber related to the second International Mobile Subscriber Identity (IMSI).

According to the present invention, it is advantageous that a very flexible forwarding pattern is easily possible to be implemented by means of the inventive method.

According to a variant of the present invention, the object of the present invention is also achieved by a method for forwarding multimedia messages in a public land mobile network (PLMN), the public land mobile network (PLMN) comprising a Core Network having a unit providing an multimedia message forwarding function for forwarding multimedia messages, the method comprising the steps of:
- in a forwarding information database storing a multimedia message forwarding information being related to the forwarding to a second International Mobile Subscriber Identity (IMSI) of multimedia messages that are directed to a first International Mobile Subscriber Identity (IMSI),
- the public land mobile network (PLMN) receiving a request for the delivery of a mobile terminated multimedia message to the first International Mobile Subscriber Identity (IMSI),
- the multimedia message forwarding function determining the multimedia message forwarding information, and
- the multimedia message forwarding function providing for the forwarding of the multimedia message to the second International Mobile Subscriber Identity (IMSI),
wherein the multimedia message forwarding information is provided such that the forwarding to the second International Mobile Subscriber Identity (IMSI) of the multimedia message directed to the first International Mobile Subscriber Identity (IMSI) depends on at least one parameter out of the time of reception of the multimedia message, the state of activation of the subscriber related to the first International Mobile Subscriber Identity (IMSI), and the state of activation of the subscriber related to the second International Mobile Subscriber Identity (IMSI).

Especially according to the above mentioned variant of the present invention, it is preferred that the multimedia message forwarding information is provided such that the forwarding to the second International Mobile Subscriber Identity of the multimedia message directed to the first International Mobile Subscriber Identity depends on
- a location information of the subscriber related to the first International Mobile Subscriber Identity and/or on
- a location information of the subscriber related to the second International Mobile Subscriber Identity.

Thereby, it is advantageously possible to provide a most flexible and convenient forwarding functionality of the multimedia message. It is evident, that the information about the location of the subscriber related to the first International Mobile Subscriber Identity and/or the information about the location of the subscriber related to the second International Mobile Subscriber Identity is to be detected or is to be made available to the multimedia message forwarding function.

Furthermore, it is preferred according to the present invention that the multimedia message forwarding function provides for the initialization and/or the definition of a charging for the forwarding of the multimedia message.

The advantage associated with such an embodiment is that a dedicated charging associated to the forwarding functionality according to the present invention can be easily realized.

According to the present invention, it is furthermore preferred that the multimedia message forwarding information is defined by means of at least one out of an USSD message, an internet user interface, and a Dual Tone Multiple Frequency (DTMF) menue.

Thereby, it is advantageously possible to easily and effectively modify and configure the forwarding functionality of the present invention.

The present invention also relates to a Core Network for forwarding multimedia messages in a public land mobile network (PLMN), the Core Network comprising at least one of a Multimedia Messaging Service Center (MMSC) and a Wireless Application Part Gateway (WAP GW), and the Core Network further comprising a unit providing a multimedia message forwarding function for forwarding multimedia messages, wherein the multimedia message forwarding function provides a forwarding to a second International Mobile Subscriber Identity (IMSI) of a multimedia message directed to a first International Mobile Subscriber Identity (IMSI) dependent on a multimedia message forwarding information stored in a subscriber database.

It is especially preferred according to the present invention that the multimedia message forwarding information is provided such that the forwarding to the second International Mobile Subscriber Identity (IMSI) of the multimedia message directed to the first International Mobile Subscriber Identity (IMSI) depends on at least one parameter out of the time of reception of the multimedia message, the state of activation of the subscriber related to the first International Mobile Subscriber Identity (IMSI), and the state of activation of the subscriber related to the second International Mobile Subscriber Identity (IMSI).

According to the present invention, it is thereby advantageously possible that a very flexible and efficient forwarding functionality can be implemented.

Unit providing a multimedia message forwarding function in a Core Network according to the present invention, wherein the multimedia message forwarding function provides a forwarding to a second International Mobile Subscriber Identity (IMSI) of a multimedia message directed to a first International Mobile Subscriber Identity (IMSI) dependent on a multimedia message forwarding information stored in the forwarding information database.

Program comprising a computer readable program code for controlling an unit providing a multimedia message forwarding function according to the present invention.

Computer program product comprising a computer-readable storage medium having computer-readable program instructions embodied in the medium for executing the method according to the present invention. Or for controlling an Core Network according to the present invention.

By means of a complete reutilisation of existing interfaces, especially interfaces of the Multimedia Messaging Service Center (MMSC) or the Wireless Application Part Gateway (WAP GW) according to the present invention, no modification of any existing network element is necessary.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrate a diagram of the inventive unit providing a multimedia message forwarding function according to the present invention.

Figure 2 schematically illustrate a part of a public land mobile network (PLMN) and especially a part of a Core Network of such a public land mobile network (PLMN) for executing the method according to the present invention and having a unit providing a multimedia message forwarding function according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

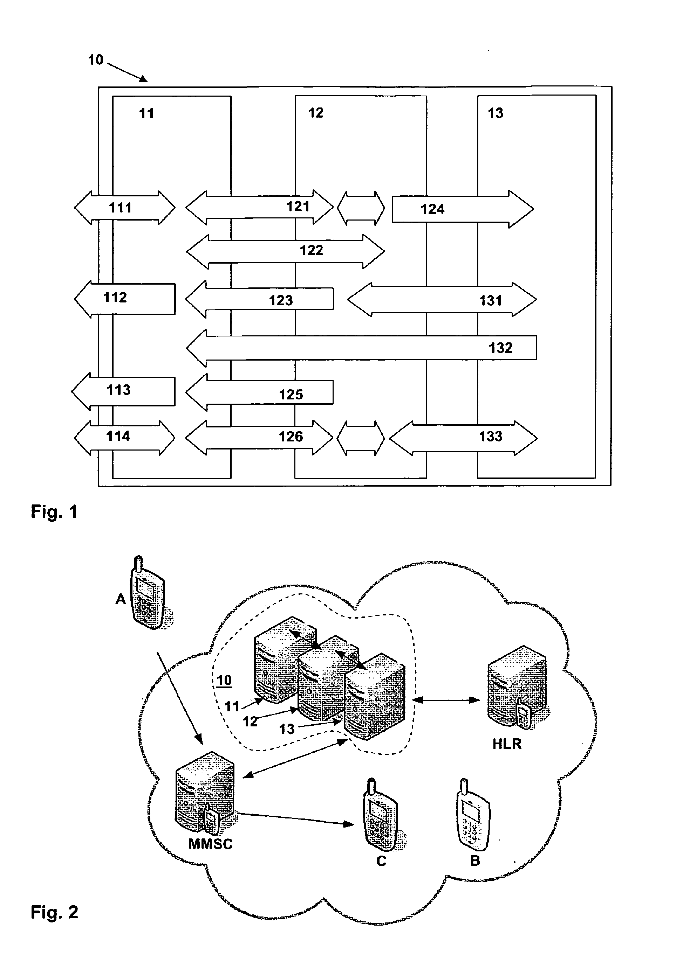

In Figure 1, a diagram of the inventive unit 10 providing a multimedia message forwarding function according to the present invention is schematically shown. The unit 10 providing a multimedia message forwarding function is preferably part of a Core Network.

In Figure 2, a part of a public land mobile network (PLMN) and especially a part of a Core Network 20 of such a public land mobile network (PLMN) for executing the method according to the present invention is schematically shown. The Core Network 20 comprises unit 10 providing a multimedia message forwarding function according to the present invention.

The unit 10 providing a multimedia message forwarding function preferably comprises an interaction functional block 11, a translation functional block 12 and a charging functional block 13.

The interaction functional block 11 comprises the interface mapping, i.e. the mapping of different protocols used in the communications with various network entities such as a Multimedia Messaging Service Center (MMSC), a Short Message Service Center (SMSC), a Mobile Switching Center (MSC), and/or a subscriber database (e.g. a Home Location Register (HLR)). The interaction functional block 11 is used for detecting the originating and terminating subscriber address information (i.e. the International Mobile Subscriber Identity (IMSI) of the initiating subscriber A (originating subscriber address) and the International Mobile Subscriber Identity (IMSI) of the first subscriber B (terminating subscriber address)). Furthermore, the interaction functional block 11 is also used for influencing of and communicating with the translation functional block 12 as well as the charging functional block 13. The translation functional block 12 comprises the service logic and preferably a database comprising the forwarding information (in the context of the present invention, such a database is called the forwarding information database). The charging functional block 13 comprises the charging logic.

Figure 2 schematically illustrates the case that an initiating subscriber A sends an multimedia message to a first (destination) subscriber B. This is done by means of using the International Mobile Subscriber Identity (IMSI) of the first subscriber in order to address the multimedia message to the first subscriber. The International Mobile Subscriber Identity (IMSI) of the first subscriber B is hereinafter also called the first International Mobile Subscriber Identity (IMSI). The representation of the inventive method as shown in Figure 2 supposes that a multimedia message forwarding is requested by the first subscriber B or that a multimedia message forwarding is requested for multimedia messages (at least at the moment of the reception of an multimedia message) directed to the first International Mobile Subscriber Identity (IMSI). It is assumed (according to Figure 2) that the requested forwarding of multimedia messages directed to the first International Mobile Subscriber Identity (IMSI) (of the first subscriber B) is provided such that a forwarding to a second subscriber C is requested, the second subscriber C having also a International Mobile Subscriber Identity (IMSI), hereinafter also called second International Mobile Subscriber Identity (IMSI).

According to the present invention, an incoming multimedia message is addressed to the first International Mobile Subscriber Identity (IMSI) and is forwarded to the second International Mobile Subscriber Identity (IMSI). This is done by means of the unit 10 providing a multimedia message forwarding function. The unit 10 providing a multimedia message forwarding function modifies the manner of signalling to the first subscriber B that an incoming multimedia message has arrived. This is done by means of influencing the message and signalization exchange (via the MM1 interface) between the Multimedia Messaging Service Center (MMSC) or the Wireless Application Part Gateway (WAP GW) on the other hand and the first subscriber B on the other hand.

According to the present invention, a plurality of different possibilities exist for providing the information to the Core Network 20 that a forwarding to the second International Mobile Subscriber Identity (IMSI) (or second subscriber) is required for an incoming multimedia message directed to the first International Mobile Subscriber Identity (IMSI) (or first subscriber). According to one embodiment of such a provisioning (or definition) of a forwarding request, the corresponding information (usually comprising or being assigned to the first International Mobile Subscriber Identity (IMSI), and further comprising or being assigned to the second International Mobile Subscriber Identity (IMSI)) can be stored in the forwarding information database as a part of the unit 10 providing a multimedia message forwarding function, such a forwarding information database being preferably associated with the translation functional block. According to one embodiment of such a provisioning (or definition) of a forwarding request, the corresponding information can be stored in a forwarding information database external to the unit 10 providing a multimedia message forwarding function or in a forwarding information database only assigned or associated to the unit 10 providing a multimedia message forwarding function.

Different forwarding scenarios are possible according to the present invention, e.g. depending on the time of reception of the multimedia message, the state of activation of the subscriber related to the first International Mobile Subscriber Identity (IMSI), and/or the state of activation of the subscriber related to the second International Mobile Subscriber Identity (IMSI). Of course, also an unconditional forwarding is possible according to the present invention.

In case of a defined forwarding address and a valid forwarding condition, the communication between the Multimedia Messaging Service Center (MMSC) and the addressed first subscriber is changed by means of the unit 10 providing a multimedia message forwarding function. Especially, messages of the Mobile Application Part (MAP) are relevant in this respect, namely:
- SendRoutingInformationForShortMessage (SRIforSM),
- ReportShortMessageDeliveryStatus (RepSmDs), and
- AlertServiceCenter (AlertSc).
In these messages, the destination address (such as the International Mobile Subscriber Identity (IMSI) or other identity information) is changed by the unit 10 providing a multimedia message forwarding function in the communication between the Multimedia Messaging Service Center (MMSC) or the Wireless Application Part Gateway (WAP GW) on the one hand and the subscriber database (such as the Home Location Register (HLR)) according the forwarding request or forwarding information in order to provide a delivery of the message to the second subscriber C (or second International Mobile Subscriber Identity (IMSI)).

The interaction functional block 11 is responsible for the communication to entities of the Core Network 20 that are external to the unit 10 providing a multimedia message forwarding function. This communication includes the communication regarding the event of an incoming multimedia message (i.e. the signalisation via the MM1 interface during the signalisation of an incoming multimedia message to the first and/or second subscriber B, C) as well as the provisioning of the corresponding forwarding rules, forwarding information, and forwarding addresse (i.e. the address of the second subscriber or second International Mobile Subscriber Identity (IMSI)). The provisioning can be provided via different channels such as Unstructured Supplementary Service Data (USSD), a graphical user interface in an internet application (WEB-UI) or a Dual Tone Multiple Frequency menue (DTMF-menue). The interaction functional block 11 needs to support these provisioning channels.

The charging functional block 13 is responsible for a charging of the events and services used during the utilisation of the multimedia message forwarding functionality according to the present invention. It is possible according to the present invention to charge the use of the multimedia message forwarding functionality based on regular payments (e.g. a monthly option fee) or by means of a fee dependent on the event of actual use of the multimedia message forwarding functionality. This usually depends on the strategy implemented by the operator of the Core Network 20. Thereby, it is possible to change the use of the forwarding functionality by means of charging tickets (intended to be included in the charging process of the operator of the Core Network 20) or by means of an online charging (e.g. via a Camel application such as CAPv3 (CAMEL Application Part), e.g. for prepaid subscribers.

An important advantage of the present invention is based on the fact that due to the integration of the unit 10 providing a multimedia message forwarding function between the Multimedia Messaging Service Center (MMSC) or the Wireless Application Part Gateway (WAP GW) on the one hand and the subscriber database (such as the Home Location Register (HLR)) on the other hand, it is possible to realise the inventive method without a modification of interfaces, protocols and service logics. Only a configuration of the Multimedia Messaging Service Center (MMSC) and/or the Wireless Application Part Gateway (WAP GW) is required such that the provisioned forwarding request information (or forwarding information) are taken into consideration. If such provisioned forwarding request information are stored in the forwarding information database of the unit 10 providing a multimedia message forwarding function, then the multimedia message can be correctly routed to the second subscriber C or second International Mobile Subscriber Identity (IMSI).

According to the present invention, the interaction functional block 11 of the unit 10 unit providing a multimedia message forwarding function comprise the following functions:
- provisioning 111,
- charging 112,
- statistics 113, as well as
- content / messaging 114.

According to the present invention, the translation functional block 12 of the unit 10 unit providing a multimedia message forwarding function comprise the following functions:
- provisioning 121,
- external provisioning 122,
- internal charging 123
- modification of subscriber data 124
- statistics 125, as well as
- service handling 126.

According to the present invention, the charging functional block 13 of the unit 10 unit providing a multimedia message forwarding function comprise the following functions:
- internal charging 131,
- external charging 132, as well as
- event handling 133.

## Claims

1. Method for forwarding multimedia messages in a public land mobile network, the public land mobile network comprising a Core Network (20) having a unit providing an multimedia message forwarding function for forwarding multimedia messages, the method comprising the steps of:
- in a forwarding information database, storing a multimedia message forwarding information being related to the forwarding, to a second International Mobile Subscriber Identity, of multimedia messages that are directed to a first International Mobile Subscriber Identity,
- the public land mobile network receiving a request for the delivery of a mobile terminated multimedia message to the first International Mobile Subscriber Identity,
- the multimedia message forwarding function determining the multimedia message forwarding information, and
- the multimedia message forwarding function providing for the forwarding of the multimedia message to the second International Mobile Subscriber Identity,
wherein the multimedia message forwarding information is provided such that the forwarding to the second International Mobile Subscriber Identity of the multimedia message directed to the first International Mobile Subscriber Identity depends on at least one parameter out of
- the time of reception of the multimedia message,
- the state of activation of the subscriber related to the first International Mobile Subscriber Identity, and
- the state of activation of the subscriber related to the second International Mobile Subscriber Identity.

2. Method according to claim 1, wherein the multimedia message forwarding information is provided such that the forwarding to the second International Mobile Subscriber Identity of the multimedia message directed to the first International Mobile Subscriber Identity depends on
- a location information of the subscriber related to the first International Mobile Subscriber Identity and/or on
- a location information of the subscriber related to the second International Mobile Subscriber Identity.

3. Method according to any of the preceding claims, wherein the multimedia message forwarding function provides for the initialization and/or the definition of a charging for the forwarding of the multimedia message.

4. Method according to any of the preceding claims, wherein the multimedia message forwarding information is defined by means of at least one out of an USSD message, an internet user interface, and a Dual Tone Multiple Frequency menue.

5. Core Network (20) for forwarding multimedia messages in a public land mobile network (PLMN), the Core Network (20) comprising at least one of a Multimedia Messaging Service Center and a Wireless Application Part Gateway, the Core Network (20) further comprising a forwarding information database, and the Core Network (20) further comprising a unit providing a multimedia message forwarding function for forwarding multimedia messages, wherein the multimedia message forwarding function provides a forwarding to a second International Mobile Subscriber Identity of a multimedia message directed to a first International Mobile Subscriber Identity dependent on a multimedia message forwarding information stored in the forwarding information database.

6. Core Network (20) according to claim 5, wherein the multimedia message forwarding information is provided such that the forwarding to the second International Mobile Subscriber Identity of the multimedia message directed to the first International Mobile Subscriber Identity depends on at least one parameter out of the time of reception of the multimedia message, the state of activation of the subscriber related to the first International Mobile Subscriber Identity, and the state of activation of the subscriber related to the second International Mobile Subscriber Identity.

7. Unit providing a multimedia message forwarding function in a Core Network (20) according to claim 5 or 6, wherein the multimedia message forwarding function provides a forwarding to a second International Mobile Subscriber Identity of a multimedia message directed to a first International Mobile Subscriber Identity dependent on a multimedia message forwarding information stored in the forwarding information database.

8. Computer program product comprising a computer-readable storage medium having computer-readable program instructions for controlling a unit providing a multimedia message forwarding function according to claim 7.

9. Computer program product comprising a computer-readable storage medium having computer-readable program instructions that when running on a computer are able to execute the steps of a method according to one of claims 1 to 4 or for controlling a Core Network (20) according to one of claims 5 or 6.
